# EUROPEAN PATENT SPECIFICATION

(11) **EP 4 312 678 B1**
(45) Date of publication and mention of the grant of the patent: **07.08.2024**
(21) Application number: 22721846.8
(22) Date of filing: 23.03.2022
(51) Int. Cl.: A47J 31/44, A47J 31/60, A47J 31/46

(54) **BEVERAGE PREPARATION MACHINE**
GETRÄNKEHERSTELLUNGSMASCHINE
MACHINE DE PRODUCTION DE BOISSONS

(30) Priority: 23.03.2021 EP 21164392; 14.02.2022 IT 202200002663
(43) Date of publication of application: 07.02.2024
(73) Proprietor: SAGA COFFEE S.p.A., 24030 Valbrembo (BG) (IT)
(72) Inventor: FIN, Giuseppe, 24030 Valbrembo (BG) (IT); CESCATO, Alessandro, 24030 Valbrembo (BG) (IT)
(74) Representative: Studio Torta S.p.A.
(86) International application number: PCT/IB2022/052634
(87) International publication number: WO 2022/201046

(56) References cited:
- WO-A1-2017/155400
- CH-A5- 694 750
- DE-A1- 102018 204 685
- US-B2- 10 448 782

## Description

### Cross-Reference to Related Applications

This patent application claims priority of European Patent Application No. 21164392.9 filed on March 23, 2021 and of Italian Patent application No. 102022000002663 filed on February 14, 2022.

### Technical Field of the Invention

The present invention relates to a beverage preparation machine, in particular a milk-based beverage preparation machine.

### State of the Art

As known, in the field of milk-based beverage preparation machines the need is felt to wash, preferably after a beverage has been delivered or at predefined time intervals, the parts of the machine that, during operation, come into contact with milk, in particular the ducts through which the milk flows and the milk the heating and foaming equipment.

Removing systematically milk residues makes it possible to avoid scales from forming and bacteria from proliferating, with contamination of the beverages produced.

Various solutions have been proposed to meet the washing requirement, some of which are known from WO2017/155400, EP2299881B1 and EP1561407B1.

US10448782 B2 discloses an automatic apparatus for heating and frothing milk. The apparatus is designed to perform a day-end washing, which is carried out by supplying a detergent along the circuit and rinsing the circuit with clean water, and a dispensing cycle-end washing, which is carried out by supplying steam along the circuit.

US2005172833 A1 is directed to a device for producing milk foam comprising a mixing chamber and supply lines for respectively supplying milk, air, and rinsing medium to the mixing chamber, wherein the air supply line has an end segment connected to the mixing chamber and the rinsing process is performed by supplying the rinsing medium to the mixing chamber at least partially via the milk supply line, and subjecting at least the end segment to a rinsing operation which begins with liquid and ends with blowing the end segment clear with steam and/or compressed air.

Most of the known solutions comprise flushing with a cleaning fluid, typically water, after the beverage has been delivered.

In general, a part of the cleaning fluid is discharged from the milk circuit at the end of the washing, while a part remains in the milk circuit and is discharged at the beginning of the delivery of the next beverage, thus diluting the beverage delivered.

### Subject and Summary of the Invention

The aim of the present invention is to provide a beverage preparation machine, in particular a milk-based beverage preparation machine, with a washing circuit adapted to remove milk residues after delivery of a milk-based beverage more effectively and cost-effectively compared to known systems.

According to the present invention a beverage preparation machine is provided, as claimed in the appended claims.

### Brief Description of the Drawings

The invention will be now described with reference to the enclosed drawings, which show a non-limiting embodiment thereof, wherein:
Figure 1 schematically shows a hydraulic circuit of a preferred embodiment of the beverage preparation machine of the present invention; and
Figures 2, 3 and 4 show the hydraulic circuit of Figure 1, where those parts of the hydraulic circuit involved in the washing of the hydraulic circuit are highlighted.

### Detailed Description of Preferred Embodiments of the Invention

The present invention will be now described in detail with reference to the enclosed Figures to enable a person skilled in the art to implement and use it. Various modifications to the described embodiments will be immediately clear to the skilled in the art and the general disclosed principles may be applied to other embodiments and applications. The scope of the invention is defined in the enclosed claims.

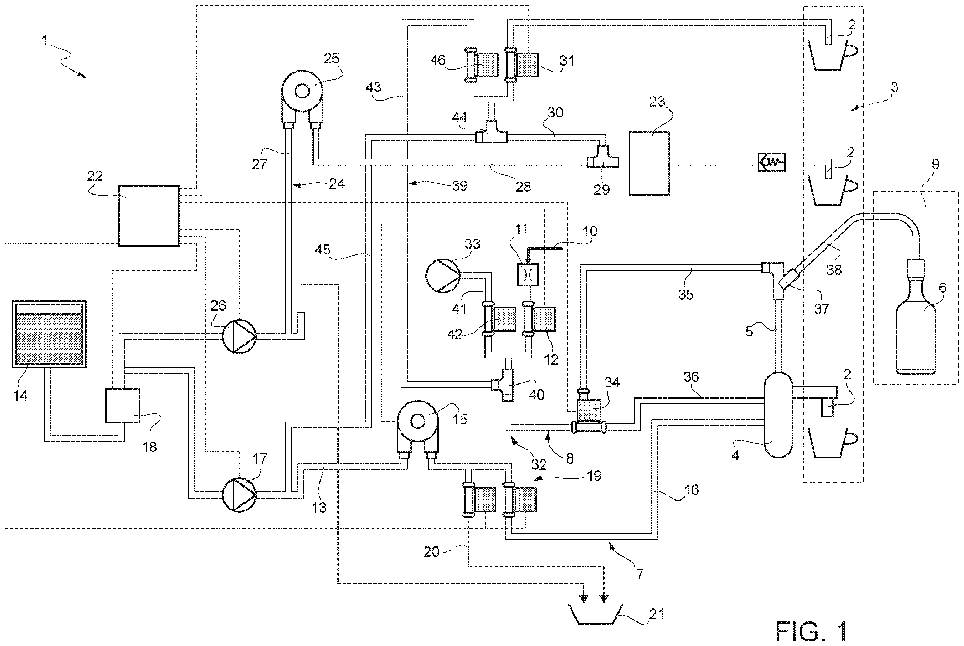

In Figure 1, reference numeral 1 denotes a beverage preparation machine, in particular a machine for preparing milk-based and/or coffee-based beverages such as, for example, hot or cold foamed milk, espresso, cappuccino, "latte macchiato", and so on.

For this purpose, the beverage preparation machine 1 comprises a milk circuit for preparing hot or cold milk, either foamed or non-foamed, and a coffee circuit for preparing coffee. The milk circuit and the coffee circuit may have, as will be described in more detail hereinafter, some common parts and have respective outlets in the form of delivery nozzles 2, which are arranged at a beverage delivery compartment 3, normally accessible from the outside by a consumer, to deliver a beverage into a cup.

The milk circuit comprises a mixing chamber 4, a milk line 5 to supply liquid milk from a milk container 6 to the mixing chamber 4, a steam line 7 to supply a steam flow to the mixing chamber 4, and an air line 8 to controllably supply an air flow to the mixing chamber 4 when foamed milk is required. Preferably, the milk container 6 is arranged within a refrigerator 9 which may be arranged either inside or outside the beverage preparation machine 1.

The air line 8 has an ambient air inlet 10 and a mechanically or electronically adjustable air flow control valve 11 to control the air flow entering the air line 8. An air shut-off valve 12 is also arranged along the air line 8 and is opened or closed depending on whether foamed or non-foamed milk is to be produced.

The steam line 7 comprises a first section 13 extending from a water tank 14 to a water heater 15 to supply a water flow thereto, and a second section 16 extending from the water heater 15 to the mixing chamber 4 to supply a steam flow thereto.

Preferably, the water tank 14 is in the form of an air-break tank which receives water directly from the water mains and supply it to the steam line 7 without being affected by any water pressure variations in the water mains. The water is sucked from the water tank 14 and supplied along the steam line 7 by a water pump 17 arranged along the first section 13, downstream of a flow meter 18.

Along the second section 16, downstream of the water heater 15, a valve assembly 19 is arranged and configured to fluidically connect an outlet of the water heater 15 to either the mixing chamber 4 or a discharge duct 20 ending into a wastewater collection tank 21. Preferably, the valve assembly 19 comprises two independent shut-off valves, which have respective inlets both in fluidic communication with the outlet of the water heater 15, and respective outlets, one of which is in fluidic communication with the mixing chamber 4 through an end portion of the steam line 7 and the other of which is in fluidic communication with the wastewater collection tank 21 through the discharge duct 20.

In a preferred embodiment, the mixing chamber 4 is so shaped that the milk flow and the air flow are sucked into the mixing chamber 4 by Venturi effect caused by the steam flow supplied to the mixing chamber 4 via the steam line 7.

All the components arranged along the steam line 7 and the milk line 5, in particular the flow meter 18, the pump 17, the heater 15, the valve unit 19 and the air shut-off valve 12 are electrically connected to an electronic control unit 22 of the beverage preparation machine 1 and electronically controlled thereby based on type of beverage to be delivered.

For example, if foamed hot milk is required, the electronic control unit 22 is designed to control the water pump 17, the water heater 15, the valve assembly 19 and the air shut-off valve 12 to cause a given steam flow to be supplied to the mixing chamber 4 to result in given amounts of milk and of air being drawn into the mixing chamber 4, thus raising also the temperature of the milk. The foamed hot milk so produced flows out of the mixing chamber 4 through a respective delivery nozzle 2 and is delivered into a cup.

If non-foamed hot milk is required, the air shut-off valve 12 is controlled to prevent air from entering the air line 8.

In an embodiment not shown, the milk circuit may also be used, with appropriate modifications, to produce foamed or non-foamed cold milk. In particular, in this embodiment the milk circuit comprises a milk pump arranged along the milk line to suck milk from the container 6 and supply it to the mixing chamber 4. Air may be supplied to the mixing chamber 4 by the suction effect causes by the milk flow supplied to the mixing chamber 4 or by an air pump provided along the air line 8. When the milk is pumped into the mixing chamber 4 by an air pump, the mixing chamber 4 does not need to be shaped so that the steam flow generates a Venturi effect capable of sucking the milk from the milk container 6, but may be shaped in any other way suitable for the mixing purpose.

As shown in Figure 1, the coffee circuit extends parallel to the milk circuit and comprises a brewing assembly 23 and a water line 24 to supply pressurised hot water to the brewing assembly 23.

For this purpose, the water line 24 comprises a water heater 25 and a water pump 26, which is arranged upstream of the water heater 25, along a first section 27 of the water line 24, to suck water from the water tank 14 and supply it to the water heater 25. Conveniently, as shown in Figure 1, the first section 27 of the water line 24 and the first section 13 of the steam line 7 share an initial section where the flow meter 18 is arranged. In an embodiment not shown, the water line 24 is completely independent of the steam line 7 and comprises an its own flow meter.

A T-joint 29 is arranged along a second section 28 of the water line 24, between the water heater 25 and the brewing assembly 23, and a derivation branch 30 of the water line 24 stems from the T-joint 29 to supply hot water to a delivery nozzle 2 in the beverage delivery compartment 3.

The supply of hot water to the derivation branch 30 is controlled by a shut-off valve (not shown) arranged between the T-joint 29 and the brewing assembly 23, and a shut-off valve 31 arranged on the bypass30. Both of the shut-off valves are electrically connected to the electronic control unit 22 and electronically controlled thereby.

As shown in Figure 1, the beverage preparation machine 1 further comprises a washing circuit to allow those parts of the milk circuit which, in use, come into contact with milk to be washed so as to remove milk residues and avoid scales from forming, which, as known, are a fertile ground for the growth and development of bacteria.

The parts of the milk circuit which, in use, need to be washed to remove any residual milk are the milk line 5 and the mixing chamber 4, including the duct transporting milk from the mixing chamber 4 to the delivery nozzle 2 of the mixing chamber 4. Another part of the milk circuit which may come into contact with milk and needs to be washed is the air line 8, in particular the end portion thereof that flows into the mixing chamber 4. Upon delivery of a milk-based beverage, milk residues in the mixing chamber 4 may be sucked into the air line 8 by depression, *i*.*e*., due to the pressure difference existing between the air line 8 and the mixing chamber 4.

According to the present invention, the washing circuit is designed to carry out a hydro-pneumatic washing, *i*.*e*., a washing which firstly comprises an actual washing step, wherein a given amount of a washing liquid is supplied to the milk line 5 and the air line 8, and immediately afterwards a blowing step, wherein a given amount of pressurised air is supplied to the milk line 5 and the air line 8 to empty the air line 8 and the milk line 5 of the washing liquid.

For this purpose, the washing circuit comprises a washing line 32 to supply a flow of washing liquid to the milk line 5 and the air line 8, and an air pump 33 to introduce pressurised air into the milk line 5 and the air line 8 after the washing liquid has been supplied thereinto.

Conveniently, water is used as the washing liquid and, for this reason, only water will be hereinafter referred to as the washing liquid. Conveniently, moreover, the water used as the washing liquid is taken from the same water source that supplies the steam line 7 of the milk circuit and the water line 24 of the coffee circuit, *i.e.*, the water tank 14. In an embodiment not shown, water may be taken from a water source independent of the water tank 14 and, in this case, not only pure water, but a mixture of water and detergent may be used as the washing liquid.

In the preferred embodiment shown in the attached Figures, the washing line 32 comprises a first portion arranged to receive washing water from the water tank 14 or pressurized air injected by the air pump 33, and a second portion fluidically connected to the first portion through a diverter valve 34 and comprising two parallel branches, a first branch 35 arranged to supply the milk line 5 with the washing water or pressurized air received from the first portion and a second branch 36 arranged to supply the air line 8 with the washing water or pressurized air received from the first portion.

In the embodiment shown in the enclosed Figures, conveniently the diverter valve 34 is arranged along the air line 8, which is hence part of both the first portion and the second portion of the washing line 32.

In particular, with regard to the second portion of the washing line 32, the branch 35 comprises a duct fluidically connecting a first outlet of the diverter valve 34 with the milk line 5, while the branch 36 comprises a portion of the air line 8 extending from a second outlet of the diverter valve 34 to the mixing chamber 4. The branch 35 ends into the milk line 5 at a joint 37 connected to a hose 38 fluidically connecting the milk line 5 with the milk container 6.

The shape of the joint 37 and its arrangement within the beverage preparation machine 1 are so chosen that the water or air being input into the joint 37 through the branch 35 tends to flow preferably towards the milk line 5 and not towards the hose 38. Thereby, washing water or pressurised air cannot reach the milk container 6 through the hose 38.

Conveniently, the hose 38 is disposable and replaceable together with the milk container 6 when the latter is empty or has reached its maximum storage time in the refrigerator 9.

With regard to the first portion of the washing line 32, it comprises a washing water line 39 ending into the air line 8 at a T-joint 40 arranged on the air line 8 upstream of the diverter valve 34 and downstream of the air shut-off valve 12, and a pressurised air line 41 fluidically connected to the air pump delivery 33 and ending into the air line 8 upstream of the joint 40, with the interposition of a shut-off valve 42.

In other words, as shown in Figure 1, washing water and pressurised air are supplied to the joint 40 through the washing water line 39 and, respectively, through the pressurised air line 41 and reach the diverter valve 34 through a common duct extending from an outlet of the joint 40 to an inlet of the diverter valve 34. As, in the preferred embodiment shown, the joint 40 and the diverter valve 34 are arranged in sequence on the air line 8, the common duct consists of a portion of the air line 8.

In a preferred embodiment, the washing water line 39 is arranged to supply either hot or cold water to the second portion of the washing line 32 through the diverter valve 34. For this purpose, the washing water line 39 is arranged to selectively supply the diverter valve 34 with either hot water taken downstream of the water heater 25 of the coffee circuit or cold water taken from the milk circuit, downstream of the water pump 17 and upstream of the water heater 15 of the steam line 7.

In particular, in order to supply hot water, the washing water line 39 comprises a duct 43 which puts in direct fluidic communication the water line 24, to which the duct 43 is connected through a joint 44 arranged downstream of the water heater 25, with the air line 8, to which the duct 43 is connected through the joint 40.

In order to supply cold water, the washing water line 39 further comprises a connection duct 45 fluidically connecting the delivery of the water pump 17 of the steam line 7 with the joint 44, so as to supply cold water to the duct 43 and, through the latter and the joint 40, to the air line 8.

The supply of hot or cold water into the duct 43 is controlled by the electronic control unit 22 by activating the water pump 26 or the water pump 17 and controlling a shut-off valve 46 arranged on the duct 43.

In the embodiment shown in the enclosed Figures, the joint 44 is conveniently arranged along the derivation branch 30 of the water line 24, more precisely of the second section 28 of the water line 24. In a variant not shown, the joint 44 may be arranged along the water line 24 upstream of the derivation branch 30, at any point of the second section 28 between the heater 25 and the T-joint 29.

In an embodiment not shown, in which the washing water is not taken from the water tank 14 but from an independent water tank, which may contain water or a mixture of water and detergent, the washing water line 29 comprises a respective water pump to take water from the water tank and a respective flow meter to measure the water supplied to the duct 43, and possibly a water heater to heat water.

In an embodiment not shown, the joint 40 and the diverter valve 34 are not arranged along the air line 8, but at the ends of a duct, which is hence equivalent to the aforementioned common duct. In this embodiment, the branch 36 fluidically connecting one of the outlets of the diverter valve 34 to the mixing chamber 4 is no longer formed by a portion of the air line 8, but by a duct extending from the corresponding outlet of the diverter valve 34 to the air line 8 to convey the washing liquid and pressurised air thereto.

In the end, in a variant of the embodiment shown in Figure 1, the pressurised air line 41 also defines an initial portion of the air line 8 so that the air which is supplied to the mixing chamber 4 via the air line 8 when a foamed milk beverage is to be produced is not ambient air, but pressurised air injected into the air line 8 by the air pump 33.

In use, the washing of the milk line 5 and air line 8 is carried out after each delivery of a milk-based beverage and, conveniently, also at pre-determined time intervals.

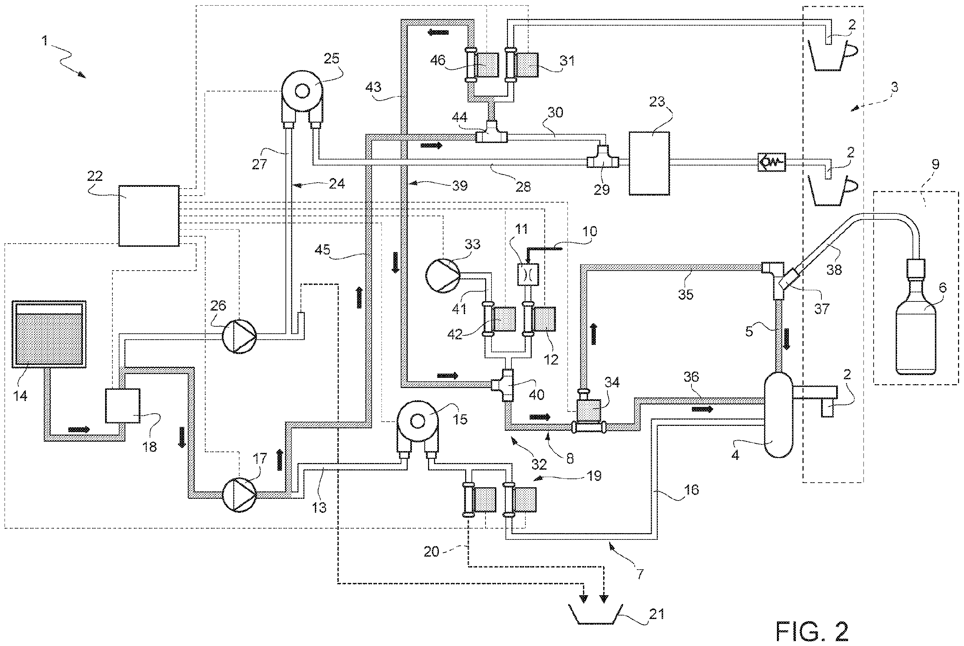

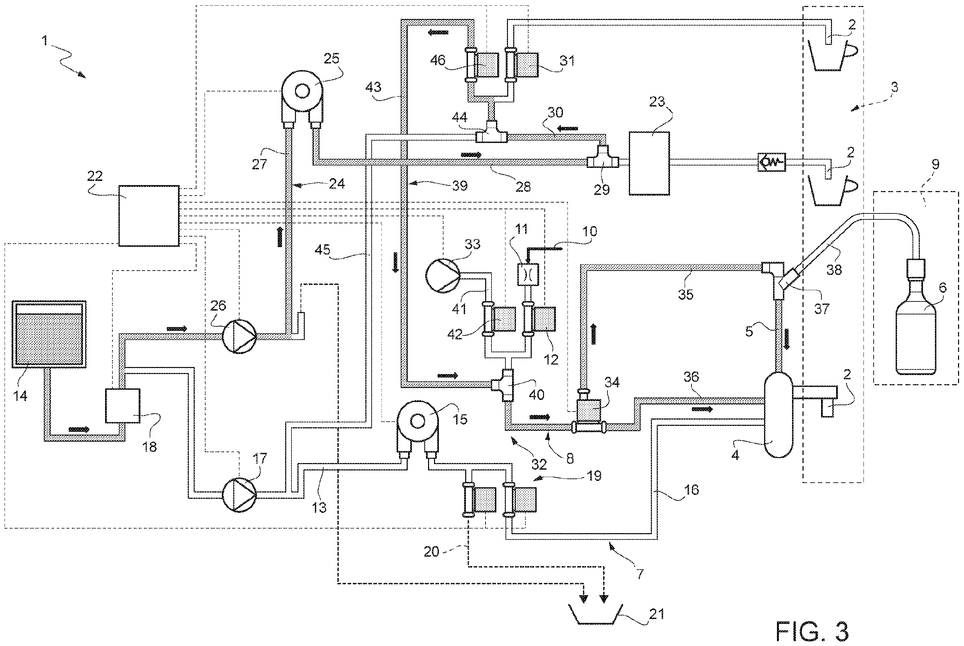

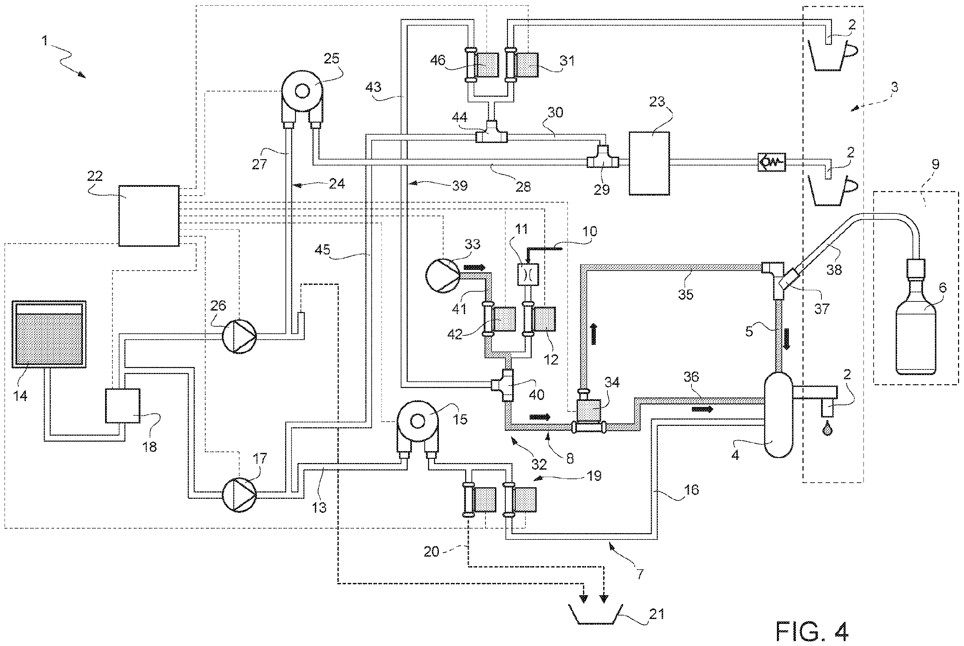

The washing sequence will be hereinafter described with reference to Figures 2, 3 and 4, which show the two steps that make up the washing sequence:
- a water preloading step, during which those parts to be washed are preloaded with cold water (Figure 2) or hot water (Figure 3), and
- a pressurised air blowing step, during which those parts to be washed are blown with pressurised air (Figure 4).

During the water preloading step, the electronic control unit 22 controls the milk circuit, the coffee circuit and the washing circuit so that a given amount of water is supplied to the milk line 5 and the air line 8.

Conveniently, the amount of washing liquid supplied to the air line 8 and milk line 5 is determined on a volumetric basis so that the volume of the washing water is equal to or slightly greater than the internal volume of the ducts of the air line 8 and milk line 5 to be washed. The volume of washing water is controlled based on the measurement of the flow meter 18.

Figure 2 schematically shows the water preloading step when washing is carried out with cold water. In this case, the water pump 17 is operated to take a given amount of water out from the water tank 14 and the shut-off valve 46 is arranged to allow cold water to flow from the connecting duct 45 to the duct 43 and, through the latter, to the air line 8.

Preferably, the diverter valve 34 is controlled so as to selectively supply water to the branch 35, which carries water to the milk line 5, and to the branch 36, which forms the portion of the air line 8 ending into the mixing chamber 4.

Figure 3 schematically shows the water preloading step when washing is carried out with hot water. In this case, the water pump 26 and the water heater 25 are operated so that a given amount of hot water is supplied to the duct 43 through the shut-off valve 46. The hot water reaches the air line 8 through the duct 43 and is supplied, in the same way as described above for cold water, to the milk line 5 and air line 8 by the diverter valve 34.

With regard to the diverter valve 34, it should be pointed out that the fact that washing water is selectively supplied to the milk line 5 and the air line 8, *i.e.*, firstly to one line and then to the other, makes it possible to supply the one and the other line with an amount of washing water corresponding, or in any case proportional, to the volume of the respective ducts to be washed and, hence, to use the proper amount of water without waste or shortage.

In a variant not shown, and applicable to the case in which the volume of the ducts to be washed on the milk line side 5 and on the air line side 8 is equal or similar, the diverter valve 34 may be configured to supply washing water to both branches 35 and 36 simultaneously.

During the water preloading step, shut-off valves 12 and 42 are closed and prevent air from entering the air line 8.

When the water preloading step is completed, either the water pump 17 or the water pump 26 and the water heater 25 are stopped and, as shown in Figure 4, the air pump 23 and the shut-off valve 42 are controlled to supply, through the diverter valve 34, a given amount of pressurized air to the milk line 5 and to the air line 8, similarly to what happens with washing water. Also in this case, in fact, the diverter valve 34 is controlled to selectively supply pressurised air to the branch 35, which carries pressurised air to the milk line 5, and to the branch 36, which forms the portion of the air line 8 ending into the mixing chamber 4.

Also in this case, in a variant not shown, the diverter valve 34 may be configured to supply washing water to both branches 35 and 36 simultaneously.

When entering the milk line 5 and air line 8, the pressurised air has the effect of sweeping away the washing water therein and pushing it out of the mixing chamber 4 through the delivery nozzle 2. The flow of pressurised air along the milk line 5 and air line 8 has the double advantage of carrying out an additional vigorous cleaning of the ducts concerned and of emptying the milk line 5 and air line 8 of the washing water, thus preventing it from being delivered into the cup at the start of the following milk-based beverage delivery.

Conveniently, the amount of pressurised air is supplied to the air line 8 and the milk line 5 by activating the air pump 33 for a predetermined time, which is stored in the electronic control unit 22 and computed so that sufficient pressurised air is supplied to the air line 8 and to the milk line 5 to completely blow away the washing water.

Conveniently, the washing step may comprise a step of cleaning the steam line 7 simultaneously or after washing the milk line 5 and the air line 8. For this purpose, the electronic control unit 22 activates the water pump 26 and the water heater 15 to supply steam pulses to the mixing chamber 4 in order to wash and sanitize the end portion of the steam line 7 and the mixing chamber 4.

In a further aspect of the present invention, the washing circuit may also be used to achieve a further technical effect that is independent of that resulting from the washing sequence described above.

This technical effect consists in interrupting the flow of milk from the milk container 6 to the mixing chamber 4 after delivery of a milk-based beverage and is achieved by introducing a given amount of pressurised air into the milk line 8.

This flow of milk is an undesirable phenomenon which occurs, for example, when in the beverage preparation machine 1 the milk container 6 is wholly or partly at a level above the mixing chamber 4 and the supply of milk from the milk container 6 to the mixing chamber 4 occurs by suction into the mixing chamber 4, for example by Venturi-effect caused by the steam flow as in the case of the example shown in the enclosed Figures.

Under these conditions, the flow of milk from the milk container 6 to the mixing chamber 4 and triggered by the suction generated by the steam flow keeps on going due to the well-known "syphon effect", even when the steam supply is interrupted. In case the milk container 6 is arranged entirely above the mixing chamber 4, the flow of milk by the siphon-effect might lead to emptying completely the milk container 6 due to the principle of communicating vessels. This undesired phenomenon is normally avoided by using a shut-off valve arranged along the milk line, with all the negative consequences that this solution entails both in terms of mechanical complexity of the circuit and in terms of cleaning the milk line.

In the further aspect of the present invention, the washing circuit makes it possible to counteract such phenomenon without the aid of additional mechanical components, but by controlling, after delivery of a milk-based beverage, the air pump 33, the shut-off valve 42 and the diverter valve 34. so as to inject into the milk line 5, through the branch 35, a flow of pressurised air which has the effect of breaking up the flow of milk into the mixing chamber 4.

Conveniently, the washing circuit is operated in this anti-flowing mode after delivery of a milk-based beverage if no immediate subsequent washing with water and pressurised air as described above is to be carried out, *e.g.*, when a "short" milk beverage, such as white coffee or other mixed beverages with less than 20g of milk, is to be produced.

## Claims

1. A beverage preparation machine (1) comprising:
a mixing chamber (4);
a milk line (5) to supply milk to the mixing chamber (4);
an air line (8) to supply air to the mixing chamber (4) to produce foamed beverages;
an air pump (33) and a liquid pump (17; 26) fluidically connected to the milk line (5) and to the air line (8); and
an electronic control unit (22) programmed to operate the beverage preparation machine (1) in a washing mode, **characterised in that** in the washing mode, the liquid pump (17; 26) is first operated to supply a given amount of a washing liquid to the air line (8) and the milk line (5), and, subsequently, the air pump (33) is operated to supply a given amount of pressurised air to the air line (8) and the milk line (5) to empty the air line (8) and the milk line (5) of the washing liquid.

2. The beverage preparation machine (1) of claim **1**, further comprising a flow meter (18) to measure the amount of washing liquid supplied by the liquid pump (17; 26) to the air line (8) and to the milk line (5); and wherein the electronic control unit (22) is further programmed to receive an output of the flow meter (18) and to operate the liquid pump (17; 26) based on the output of the flow meter (18) to supply the air line (8) and the milk line (5) with an amount of washing liquid commensurate with an internal volume of the ducts of the air line (8) and the milk line (5) to be washed.

3. The beverage preparation machine (1) of claim **1** or **2**, further comprising a washing liquid line (39) arranged to be supplied with the washing liquid from the liquid pump (17; 26); and a pressurised air line (41) arranged to be supplied with pressurised air from the air pump (33); the washing liquid line (39) and the pressurised air line (41) supply the washing liquid and the pressurised air, respectively, to a common duct fluidically connectable to the mixing chamber (4) through a diverter valve (34); the diverter valve (34) comprises a first outlet fluidically connected to the milk line (5) and a second outlet fluidically connected to the air line (8).

4. The beverage preparation machine (1) of claim **3**, wherein the electronic control unit (22) is further programmed to control the diverter valve (34) during the washing mode to cause a preloading step to be carried out first, in which the liquid pump (17; 26) is operated and the diverter valve (34) is controlled to supply the washing liquid in succession to the first and second outlets of the diverter valve (34), and then a blowing step to be carried out, in which the air pump (33) is operated and the diverter valve (34) is controlled to supply the pressurised air in succession to the first and second outlets of the diverter valve (34).

5. The beverage preparation machine (1) of claim **4**, wherein the diverter valve (34) is arranged along the air line (8) and the common duct is formed by a portion of the air line (8) extending between the diverter valve (34) and a joint (40), at which the washing liquid line (39) and the pressurised air line (41) converge.

6. The beverage preparation machine (1) of claim **5**, wherein said first outlet of the diverter valve (34) supplies the washing liquid and the pressurised air to the milk line (5) via a connection branch (35), and the second outlet of the diverter valve (34) supplies the washing liquid and the pressurised air directly to a portion of the air line (8) extending from the diverter valve (34) to the mixing chamber (4).

7. The beverage preparation machine (1) according to claim **5** or **6**, wherein the air line (8) has an ambient air inlet (10); a flow control valve device (11); and a shut-off valve device (42) controllable by the electronic control unit (22) to supply a given amount of air to the mixing chamber (4), via the air line (8), when an foamed milk beverage is to be produced.

8. The beverage preparation machine (1) of any one of claims 3 to **7**, wherein the washing liquid line (39) comprises a heater (25) fluidically connected to a delivery of the liquid pump (17; 26) to heat the washing liquid during the washing mode.

## Patentansprüche

1. Eine Maschine zur Zubereitung von Getränken (1), wobei die Maschine Folgendes aufweist:
eine Mischkammer (4);
eine Milchleitung (5) zur Versorgung der Mischkammer (4) mit Milch;
eine Luftleitung (8) zur Versorgung der Mischkammer (4) mit Luft zur Herstellung von geschäumten Getränken;
eine Luftpumpe (33) und eine Flüssigkeitspumpe (17; 26), die strömungstechnisch mit der Milchleitung (5) und mit der Luftleitung (8) verbunden sind; und
eine elektronische Steuereinheit (22), die so programmiert ist, dass sie die Maschine zur Zubereitung von Getränken (1) in einem Waschmodus betreibt,
**dadurch gekennzeichnet, dass** im Waschmodus,
die Flüssigkeitspumpe (17; 26) zunächst betätigt wird, um die Luftleitung (8) und die Milchleitung (5) mit einer bestimmten Menge einer Waschflüssigkeit zu versorgen, und anschließend die Luftpumpe (33) betätigt wird, um die Luftleitung (8) und die Milchleitung (5) mit einer bestimmten Menge an Druckluft zu versorgen, um die Luftleitung (8) und die Milchleitung (5) von der Waschflüssigkeit zu entleeren.

2. Die Maschine zur Zubereitung von Getränken (1) nach Anspruch 1, die ferner einen Durchflussmesser (18) aufweist, um die Menge an Waschflüssigkeit zu messen, mit der die Flüssigkeitspumpe (17; 26) die Luftleitung (8) und die Milchleitung (5) versorgen; und wobei die elektronische Steuereinheit (22) ferner so programmiert ist, dass sie eine Ausgabe des Durchflussmessers (18) empfängt und die Flüssigkeitspumpe (17; 26) auf Grundlage der Ausgabe des Durchflussmessers (18) zu betreiben, um die Luftleitung (8) und die Milchleitung (5) mit einer Menge an Waschflüssigkeit zu versorgen, die einem Innenvolumen der Leitungen der Luftleitung (8) und der Milchleitung (5) entspricht, die gewaschen werden sollen.

3. Die Maschine zur Zubereitung von Getränken (1) nach Anspruch 1 oder 2, die ferner eine Waschflüssigkeitsleitung (39) aufweist, die so angeordnet ist, dass sie von der Flüssigkeitspumpe (17; 26) mit der Waschflüssigkeit versorgt wird; und eine Druckluftleitung (41), die so angeordnet ist, dass sie von der Luftpumpe (33) mit Druckluft versorgt wird; wobei die Waschflüssigkeitsleitung (39) und die Druckluftleitung (41) jeweils die Waschflüssigkeit und die Druckluft einer gemeinsamen Leitung zuführen, die strömungstechnisch mit der Mischkammer (4) durch ein Umlenkventil (34) verbunden werden kann; wobei das Umlenkventil (34) einen ersten Auslass aufweist, der strömungstechnisch mit der Milchleitung (5) verbunden ist, und einen zweiten Auslass, der strömungstechnisch mit der Luftleitung (8) verbunden ist.

4. Die Maschine zur Zubereitung von Getränken (1) nach Anspruch 3, wobei die elektronische Steuereinheit (22) ferner so programmiert ist, dass sie das Umlenkventil (34) während des Waschmodus so steuert, dass zunächst ein Vorfüllschritt ausgeführt wird, bei dem die Flüssigkeitspumpe (17; 26) betrieben wird und bei dem das Umlenkventil (34) gesteuert wird, dass nacheinander der erste und der zweite Auslass des Umlenkventils (34) mit Waschflüssigkeit versorgt wird, und dass dann ein Ausblasschritt ausgeführt wird, bei dem die Luftpumpe (33) betrieben wird und das Umlenkventil (34) so gesteuert wird, dass nacheinander der erste und der zweite Auslass des Umlenkventils (34) mit Druckluft versorgt wird.

5. Die Maschine zur Zubereitung von Getränken (1) nach Anspruch 4, wobei das Umlenkventil (34) entlang der Luftleitung (8) angeordnet ist und wobei die gemeinsame Leitung durch einen Abschnitt der Luftleitung (8) gebildet wird, der sich zwischen dem Umlenkventil (34) und einer Verbindungsstelle (40) erstreckt, an der die Waschflüssigkeitsleitung (39) und die Druckluftleitung (41) zusammenlaufen.

6. Die Maschine zur Zubereitung von Getränken (1) nach Anspruch 5, wobei der erste Auslass des Umleitungsventils (34) die Waschflüssigkeit und die Druckluft über einen Verbindungszweig (35) der Milchleitung (5) zuführt und wobei der zweite Auslass des Umleitungsventils (34) die Waschflüssigkeit und die Druckluft direkt einem Abschnitt der Luftleitung (8) zuführt, der sich von dem Umleitungsventil (34) zur Mischkammer (4) erstreckt.

7. Die Maschine zur Zubereitung von Getränken (1) nach Anspruch 5 oder 6, wobei die Luftleitung (8) einen Umgebungslufteinlass (10), eine Flussregelventileinrichtung (11) und eine Absperrventileinrichtung (2) aufweist, die von der elektronischen Steuereinheit (22) steuerbar ist, um die Mischkammer (4) über die Luftleitung (8) mit einer bestimmten Luftmenge zu versorgen, wenn ein Milchschaumgetränk hergestellt werden soll.

8. Die Maschine zur Zubereitung von Getränken (1) nach einem der Ansprüche 3 bis 7, wobei die Waschflüssigkeitsleitung (39) ein Heizgerät (25) aufweist, das strömungstechnisch mit einer Zuführung der Flüssigkeitspumpe (17; 26) verbunden ist, um die Waschflüssigkeit während des Waschvorgangs zu erwärmen.

## Revendications

1. Machine de préparation de boissons (1) comprenant :
une chambre de mélange (4) ;
une conduite de lait (5) pour fournir le lait à la chambre de mélange (4) ;
une conduite d'air (8) pour fournir de l'air à la chambre de mélange (4) afin de produire des boissons avec de la mousse ;
une pompe d'air (33) et une pompe de liquide (17 ; 26) raccordées de manière fluidique à la conduite de lait (5) et à la conduite d'air (8) ; et
une unité électronique de commande (22) programmée pour actionner la machine de préparation de boissons (1) dans un mode de lavage, **caractérisée en ce que**, dans le mode de lavage, la pompe de liquide (17 ; 26) est tout d'abord actionnée pour fournir une quantité donnée d'un liquide de lavage à la conduite d'air (8) et à la conduite de lait (5), et ensuite, la pompe d'air (33) est actionnée pour fournir une quantité donnée d'air sous pression à la conduite d'air (8) et à la conduite de lait (5) afin de vider la conduite d'air (8) et la conduite de lait (5) du liquide de lavage.

2. Machine de préparation de boissons (1) selon la revendication 1, comprenant en outre un débitmètre (18) pour mesurer la quantité de liquide de lavage fourni par la pompe de liquide (17 ; 26) à la conduite d'air (8) et à la conduite de lait (5) ; et dans laquelle l'unité électronique de commande (22) est en outre programmée pour recevoir une sortie du débitmètre (18) et pour actionner la pompe de liquide (17 ; 26) sur la base de la sortie du débitmètre (18) afin d'alimenter la conduite d'air (8) et la conduite de lait (5) avec une quantité de liquide de lavage proportionnelle à un volume interne des conduits de la conduite d'air (8) et de la conduite de lait (5) à laver.

3. Machine de préparation de boissons (1) selon la revendication 1 ou 2, comprenant en outre une conduite de liquide de lavage (39) agencée pour être alimentée avec le liquide de lavage depuis la pompe de liquide (17 ; 26) ; et une conduite d'air sous pression (41) agencée pour être alimentée avec de l'air sous pression de la pompe d'air (33) ; la conduite de liquide de lavage (39) et la conduite d'air sous pression (41) fournissent respectivement le liquide de lavage et l'air sous pression à un conduit commun pouvant être raccordé, de manière fluidique, à la chambre de mélange (4) par le biais d'une soupape de dérivation (34) ; la soupape de dérivation (34) comprend une première sortie raccordée, de manière fluidique, à la conduite de lait (5) et une deuxième sortie raccordée, de manière fluidique, à la conduite d'air (8).

4. Machine de préparation de boissons (1) selon la revendication 3, dans laquelle l'unité électronique de commande (22) est en outre programmée pour commander la soupape de dérivation (34) pendant le mode de lavage afin de provoquer tout d'abord la réalisation d'une étape de précharge, dans laquelle la pompe de liquide (17 ; 26) est actionnée et la soupape de dérivation (34) est commandée pour alimenter le liquide de lavage en succession aux première et deuxième sorties de la soupape de dérivation (34) et ensuite la réalisation d'une étape de soufflage, dans laquelle la pompe à air (33) est actionnée et la soupape de dérivation (34) est commandée pour alimenter l'air sous pression en succession aux première et deuxième sorties de la soupape de dérivation (34).

5. Machine de préparation de boissons (1) selon la revendication 4, dans laquelle la soupape de dérivation (34) est agencée le long de la conduite d'air (8) et le conduit commun est formé par une partie de la conduite d'air (8) s'étendant entre la soupape de dérivation (34) et un joint (40) au niveau duquel convergent la conduite de liquide de lavage (39) et la conduite d'air sous pression (41).

6. Machine de préparation de boissons (1) selon la revendication 5, dans laquelle ladite première sortie de la soupape de dérivation (34) alimente le liquide de lavage et l'air sous pression à la conduite de lait (5), via une branche de raccordement (35) et la deuxième sortie de la soupape de dérivation (34) alimente le liquide de lavage et l'air sous pression directement à une partie de la conduite d'air (8) s'étendant de la soupape de dérivation (34) à la chambre de mélange (4).

7. Machine de préparation de boissons (1) selon la revendication 5 ou 6, dans laquelle la conduite d'air (8) a une entrée d'air ambiant (10) ; un dispositif de soupape de régulation de débit (11) ; et un dispositif de soupape d'arrêt (42) pouvant être commandé par l'unité électronique de commande (22) pour alimenter une quantité donnée d'air à la chambre de mélange (4), via la conduite d'air (8), lorsqu'une boisson lactée avec de la mousse doit être produite.

8. Machine de préparation de boissons (1) selon l'une quelconque des revendications 3 à 7, dans laquelle la conduite de liquide de lavage (39) comprend un dispositif de chauffage (25) raccordé, de manière fluidique, à une distribution de la pompe de liquide (17 ; 26) afin de chauffer le liquide de lavage pendant le mode de lavage.
